# EUROPÄISCHE PATENTANMELDUNG

(11) **EP 2 527 784 A1**
(43) Veröffentlichungstag der Anmeldung: **28.11.2012**
(21) Anmeldenummer: 11166780.4
(22) Anmeldetag: 19.05.2011
(51) Int. Cl.: G01B 11/25, G01S 17/42, G06T 7/00

(54) **Optisches Messverfahren und Messsystem zum Bestimmen von 3D-Koordinaten auf einer Messobjekt-Oberfläche**

(71) Anmelder: Hexagon Technology Center GmbH, 9435 Heerbrugg (CH)
(72) Erfinder: Siercks, Knut, 9402 Mörschwil (CH)
(74) Vertreter: Gyaja, Christoph Benjamin

(57) **Zusammenfassung**

Die Erfindung betrifft ein optisches Messverfahren zum Bestimmen von 3D-Koordinaten von einer Vielzahl von Messpunkten einer Messobjekt-Oberfläche (1s).

Dafür erfolgen ein Beleuchten der Messobjekt-Oberfläche (1s) mit einer Muster-Sequenz aus unterschiedlichen Mustern (2a) durch einen Projektor (3), ein Aufnehmen einer Bild-Sequenz von der mit der Muster-Sequenz beleuchteten Messobjekt-Oberfläche (1s) mit einem Kamerasystem, und ein Bestimmen der 3D-Koordinaten der Messpunkte durch Auswerten der Bild-Sequenz, insbesondere wobei eine Folge von Helligkeitswerten für identische Messpunkte der Messobjekt-Oberfläche (1s) in jeweiligen Bildern der aufgenommenen Bild-Sequenz ermittelt wird.

Erfindungsgemäss werden dabei translatorische und/oder rotatorische Beschleunigungen des Projektors (3), des Kamerasystems und/oder des Messobjekts (1) gemessen und in Abhängigkeit von den gemessenen Beschleunigungen das Beleuchten der Messobjekt-Oberfläche (1s) und/oder das Aufnehmen der Bild-Sequenz, insbesondere zeitlich im Wesentlichen unmittelbar und live während des Messvorgangs, reaktiv angepasst.

## Beschreibung

Die Erfindung betrifft ein optisches Messverfahren zum Bestimmen von 3D-Koordinaten von einer Vielzahl von Messpunkten einer Messobjekt-Oberfläche nach dem Oberbegriff des Anspruchs 1 sowie ein zu selbigem Zweck ausgebildetes Messsystem nach dem Oberbegriff des Anspruchs 10.

Derartige Vorrichtungen und Verfahren werden insbesondere im Maschinenbau, Automobilbau, Keramikindustrie, Schuhindustrie, Schmuckindustrie, Dentaltechnik und Humanmedizin (Orthopädie) und weiteren Bereichen verwendet und kommen beispielsweise zum Einsatz für die Vermessung und Protokollierung für Qualitätskontrolle, Reverse Engineering, Rapid Prototyping, Rapid Milling oder Digital Mock-Up.

Die steigenden Forderungen nach einer weitgehend vollständigen Qualitätskontrolle im laufenden Produktionsprozess sowie nach der Digitalisierung der Raumform von Prototypen machen die Aufnahme von Oberflächentopografien zu einer immer häufiger gestellten Messaufgabe. Dabei stellt sich die Aufgabe, die Koordinaten einzelner Punkte der Oberfläche der zu vermessenden Gegenstände in kurzer Zeit zu bestimmen.

Aus dem Stand der Technik bekannte, Bild-Sequenzen verwendende Messsysteme zur Bestimmung von 3D-Koordinaten von Messobjekten, die beispielsweise als portable, handhaltbare und/oder fest installierte Systeme ausgebildet sein können, weisen dabei im Allgemeinen einen Musterprojektor zur Beleuchtung des Messobjekts mit einem Muster auf und werden daher teilweise auch als musterprojizierende 3D-Scanner oder Lichtstrukturen-3D-Scanner bezeichnet. Das auf die Oberfläche des Messobjekts projizierte Muster wird von einem Kamerasystem als weiterer Bestandteil des Messsystems aufgenommen.

Im Rahmen einer Messung beleuchtet also der Projektor das Messobjekt zeitlich sequentiell mit unterschiedlichen Mustern (z.B. parallele helle und dunkle Streifen unterschiedlicher Breite, insbesondere kann auch eine Drehung des Streifenmusters z.B. um 90° erfolgen). Die Kamera(s) registrieren das projizierte Streifenmuster unter einem bekannten Blickwinkel zur Projektion. Für jedes Projektionsmuster wird mit jeder Kamera ein Bild aufgenommen. Für jeden Bildpunkt aller Kameras entsteht so eine zeitliche Folge von unterschiedlichen Helligkeitswerten.

Projiziert werden können dabei ausser Streifen jedoch auch entsprechende andere Muster, wie beispielsweise Random Patterns, Pseudocodes, etc. Dafür geeignete Muster sind aus dem Stand der Technik dem Fachmann hinlänglich bekannt. Pseudocodes ermöglichen z.B. eine leichtere absolute Zuordnung von Objektpunkten, was bei der Projektion sehr feiner Streifen zunehmend schwieriger wird. Zu diesem Zweck kann also entweder in schneller Folge zunächst ein oder mehrere Pseudocodes und danach ein feines Streifenmuster oder auch in aufeinander folgenden Aufnahmen verschiedne, in der Abfolge feiner werdende Streifenmuster projiziert werden, bis die gewünschte Genauigkeit in der Auflösung von Messpunkten auf der Messobjekt-Oberfläche erreicht ist.

Die 3D-Koordinaten der Messobjekt-Oberfläche können dann aus der aufgenommenen Bild-Sequenz mittels Bildverarbeitung nach dem Fachmann auf diesem Gebiet bekannten Verfahren aus der Photogrammetrie und/oder Streifenprojektion berechnet werden. Beispielsweise sind derartige Messverfahren und Messsysteme beschrieben in der WO 2008/046663, der DE 101 27 304 A1, der DE 196 33 686 A1 oder der DE 10 2008 036 710 A1.

Im Üblichen besteht das Kamerasystem aus einer oder mehreren digitalen Kameras, die sich während einer Messung in bekannter räumlicher Lage zueinander befinden. Zur Gewährleistung einer stabilen Lage der Kameras relativ zueinander sind diese meist fix mit bekannter räumlicher Positionierung und Ausrichtung zusammen in einem gemeinsamen Gehäuse integriert, insbesondere wobei die Kameras derart ausgerichtet sind, dass sich die Sichtfelder der einzelnen Kameras grösstenteils überschneiden. Oft werden dabei zwei oder drei Kameras verwendet. Der Projektor kann dabei fest mit dem Kamerasystem verbunden sein (im Falle der Verwendung von getrennten Kameras auch nur mit einem Teil der vorhandenen Kameras des Kamerasystems) oder auch komplett getrennt vom Kamerasystem positioniert werden.

Die gesuchten dreidimensionalen Koordinaten der Oberfläche werden im allgemeinen Fall, d.h. im Fall dass relative Positionierung und Ausrichtung von Projektor zum Kamerasystem fix zueinander und daher nicht vorab schon bekannt ist, in zwei Schritten berechnet. In einem ersten Schritt werden dann die Koordinaten des Projektors wie folgt bestimmt. Zu einem gegebenen Objektpunkt sind die Bildkoordinaten im Kamerabild bekannt. Der Projektor entspricht einer umgekehrten Kamera. Aus der Folge von Helligkeitswerten, die aus der Bildsequenz für jeden Kamerabildpunkt gemessen wurden, kann die Nummer des Streifens berechnet werden. Im einfachsten Fall erfolgt das über einen Binärkode (z.B. einen Gray-Code) der die Nummer des Streifens als diskrete Koordinate im Projektor kennzeichnet. Eine höhere Genauigkeit ist mit dem so genannten Phasenschiebeverfahren zu erreichen, da es eine nicht diskrete Koordinate bestimmen kann. Es kann entweder als Ergänzung eines Gray-Codes oder als absolut messendes Heterodynverfahren eingesetzt werden.

Nach solcherart bestimmter Position des Projektors oder bei bereits vorab bekannter Position desselben relativ zum Kamerasystem können nun - z.B. durch die Methode des Vorwärtsschnitts - wie folgt 3D-Koordinaten von Messpunkten auf der Messobjekt-Oberfläche ermittelt werden. Die Streifennummer im Projektor entspricht der Bildkoordinate in der Kamera. Die Streifennummer spezifiziert eine Lichtebene im Raum, die Bildkoordinate einen Lichtstrahl. Bei bekannter Kamera und Projektorposition kann der Schnittpunkt der Ebene und der Gerade berechnet werden. Das ist die gesuchte dreidimensionale Koordinate des Objektpunktes im Koordinatensystem des Sensors. Die geometrische Lage aller Bildstrahlen muss genau bekannt sein. Die exakte Berechnung der Strahlen erfolgt mit dem aus der Photogrammetrie bekannten Vorwärtsschnitt.

Zur Erzielung von höheren Genauigkeiten bei diesem Messverfahren für die Berechnung der 3D-Koordinaten können die nicht idealen Eigenschaften von realen Linsensystemen, die in Verzerrungen des Bildes resultieren, durch eine Verzeichnungskorrektur angepasst werden und/oder eine präzise Kalibrierung der Abbildungseigenschaften erfolgen. Alle Abbildungseigenschaften von Projektor und Kameras können dabei im Rahmen von dem Fachmann bekannten Kalibrierungsprozessen (z.B. einer Serie von Kalibrieraufnahmen) gemessen und daraus ein mathematisches Modell zur Beschreibung dieser Abbildungseigenschaften generiert werden (z.B. werden aus der Serie von Kalibrieraufnahmen mit photogrammetrischen Methoden - insbesondere mit einer Bündelausgleichsrechnung - die die Abbildungseigenschaften bezeichnende Parameter bestimmt).

Zusammengefasst ist also bei dem Musterprojektionsverfahren bzw. bei Lichtstrukturen-3D-Scanner eine Beleuchtung des Objekts mit einer Sequenz von Lichtmustern erforderlich, um eine eindeutige Tiefenbestimmung der Messpunkte im Messbereich mit Hilfe von Triangulation (Vorwärtsschnitt) zu ermöglichen. Es sind also meist mehrere Aufnahmen (d.h. eine Serie von Bildern) unter Beleuchtung des Messobjekts mit entsprechenden unterschiedlichen Muster-Projektionen (d.h. mit einer entsprechenden Serie von Mustern) notwendig, um eine hinlänglich hohe Genauigkeit bezüglich des Messergebnisses zu gewährleisten. Bei aus dem Stand der Technik bekannten handgehaltenen Systemen, wie beispielsweise bei der in der WO 2008/046663 beschriebenen Messvorrichtung, muss die Beleuchtungssequenz dabei derart schnell erfolgen, dass eine Bewegung durch den Bediener während des Aufnehmens der Serie von Bildern nicht zu Messfehlern führt. Die durch die Kameras aufgenommenen Bildpunkte der jeweiligen Projektion müssen hinreichend gut untereinander zugeordnet werden können. Somit muss die Bildsequenz schneller als die durch den Bediener verursachte Muster- oder Bildverschiebung erfolgen. Da die emittierbare optische Energie des Projektors durch die verfügbaren optischen Quellen und durch Strahlenschutzbestimmungen begrenzt ist, führt dies zu einer Limitierung der detektierbaren Energie im Kamerasystem und somit zu einer Limitierung der Messung auf schwach reflektierenden Messobjekt-Oberflächen. Weiterhin sind die Projektoren in der Projektionsgeschwindigkeit (Bildrate) begrenzt. Übliche maximale Bildraten solcher Projektoren liegen beispielsweise um 60 Hz.

Für einen Messvorgang mit Projizieren einer Serie von Patterns und Aufnehmen einer Bild-Sequenz der jeweiligen Patterns mit dem Kamerasystem ist mit herkömmlichen Messvorrichtungen z.B. eine Messdauer von etwa 200 ms nötig (als Beispiel: für die Aufnahme von Sequenzen von 8 bis 10 Bildern bei einer Belichtungsdauer 20 ms bis 40 ms pro Bild können sich z.B. Gesamtaufnahmezeiten bzw. Messdauern von zwischen 160 ms und 400 ms pro Messposition ergeben).

Bei nicht hinlänglichem Ruhighalten bzw. bei nicht hinlänglich hoher Positions- und Ausrichtungshaltigkeit der Kameraanordnung, des Projektors (bzw. ggf. eines die Kameraanordnung und den Projektor integriert beinhaltenden Messkopfes) und des Messobjekts relativ zueinander während eines Messvorgangs (in einer Messposition) kann es somit zu verschiedenen unerwünschten und die Auswertung erschwerenden, verkomplizierenden, gar verunmöglichenden oder zumindest die erzielbare Genauigkeit negativ beeinflussenden Effekten kommen.

Für ein unzulängliches Ruhighalten der Kameraanordnung, des Projektors (bzw. ggf. eines die Kameraanordnung und den Projektor integriert beinhaltenden Messkopfes) oder des Messobjekts können dabei unterschiedliche Ursachen infrage kommen.

Zum einen können Vibrationen in der Messumgebung (z.B. falls die Messungen an einer in eine Produktionsstrasse integrierten Produktionsstation durchgeführt werden) auf die Halterung des Messobjekts oder auch einen den Messkopf haltenden Roboterarm übertragen werden und somit zu störenden Schwingungen führen. Daher sind bisher aufwändige Massnahmen zur Schwingungsdämpfung nötig oder es ist ein Ausweichen auf spezielle Messräume erforderlich, was jedoch den Produktionsprozess deutlich aufwändiger gestaltet (da ein Entnehmen des Messobjekts aus der Produktionsstrasse und ein Transportieren desselben in den entsprechend dafür ausgelegten Messraum erforderlich ist).

Bei handgehaltenen Systemen ist die Hauptursache für unzulängliches Nichtruhighalten insbesondere der natürliche Tremor in der Hand des menschlichen Benutzers.

Als negative Effekte, die durch mangelnde Positions- und Ausrichtungshaltigkeit der Kameraanordnung, des Projektors und des Messobjekts relativ zueinander bewirkt werden können, sind - zum einen - eine Bewegungsunschärfe und/oder Verwacklungen in einzelnen aufgenommenen Bildern einer Bild-Sequenz zu nennen.

Zum anderen können jedoch auch Unkonformitäten der einzelnen Bilder einer Bild-Sequenz zueinander bezüglich deren jeweiligen Aufnahmepositionen und -richtungen relativ zum Messobjekt (d.h. Schwankungen in den Aufnahmepositionen und -richtungen bei den einzelnen Bildern innerhalb einer Bild-Sequenz) auftreten, sodass ein jeweiliges Zuordnen von Bildpunkten in den einzelnen Bildern zu identischen Messpunkten auf der Messobjekt-Oberfläche entweder ganz verunmöglicht ist oder nur durch enorm hohen Rechenaufwand und Miteinbeziehen von Informationen aus einer Vielzahl von Bildern desselben Bereichs der Messobjekt-Oberfläche ermöglicht werden kann (d.h. es kann ein sich sehr aufwändig gestaltendes nachträgliches rechnerisches in räumlichen Bezug Bringen der Einzelbilder erforderlich sein, weshalb bisher teilweise präventiv gegen diesen Effekt ein Überschuss an Bildern pro Bild-Sequenz aufgenommen werden, die hauptsächlich lediglich zum Rückrechnen des räumlichen Bezugs der Aufnahmepositionen und -richtungen der einzelnen Bilder untereinander dienen).

Zur Erweiterung des Messbereichs auf dem Messobjekt (z.B. zur Vermessung eines Objekts in seiner Gesamtheit), sind oft mehrere Messungen nacheinander (aus verschiedenen Messpositionen und unter verschiedenen Blickwinkeln der Kameras relativ zum Messobjekt) erforderlich, wobei die Ergebnisse der verschiedenen Messungen anschliessend miteinander verknüpft werden. Dies kann beispielsweise dadurch erfolgen, dass bei den jeweiligen Messvorgängen die Erfassungsbereiche jeweils überlappend gewählt werden und der jeweilige Überlapp zum entsprechenden Zusammenfügen der bei mehreren Messvorgängen gewonnenen 3D-Koordinaten (d.h. Punktwolken) verwendet wird (d.h. es können identische oder ähnliche Verteilungen in den bei den einzelnen Messvorgängen bestimmten Punktwolken identifiziert und dementsprechend die Punktwolken zusammengefügt werden).

Dieser Zusammenfügungsvorgang ist im Allgemeinen jedoch extrem rechenintensiv und bedarf sogar bei Verfügbarkeit von höchsten Prozessorleistungen dennoch einen nicht zu verachtenden und störend hohen Zeit- und Energieaufwand. Bei Verwendung z.B. eines Roboterarms zum Halten und Führen des Messkopfes kann etwa dadurch eine Reduzierung des für den Zusammenfügungsvorgang erforderlichen Rechenaufwands erreicht werden, indem die Aufnahmepositionen und - richtungen bei den einzelnen Messungen anhand der jeweiligen Roboterarmstellung erfasst und diese für das Zusammenfügen als Vorinformation (z.B. als Randbedingungen) herangezogen werden.

Nachteile hierbei sind die verhältnismässig geringe Genauigkeit mit welcher anhand der Roboterarmstellung die Messposition bestimmbar ist und - gleichwohl - das Erfordernis des Vorhandenseins eines solchen Roboterarms. So kann die Rechenleistung, die für das Zusammenfügen von Messergebnissen mehrerer Messvorgänge erforderlich ist, für handgehaltene Messsysteme nicht auf diese Weise reduziert werden.

Weiterer Nachteile von Systemen des Standes der Technik, welche zur Musterbeleuchtung im Wesentlichen kohärente optische Strahlung verwenden, sind - durch ungewollt auftretende Specklefelder in den jeweiligen Mustern der Muster-Sequenz hervorgerufene - lokale Messungenauigkeiten oder Messpunkt-Lücken.

Die Europäische Patentanmeldung mit der Anmeldenummer 10166672.5 beschreibt dabei ein Musterprojektionsverfahren bzw. einen Lichtstrukturen-3D-Scannerm, wobei am Projektor, am Kamerasystem und/oder am Messobjekt Inertialsensoren vorgesehen sind zur Messung von translatorischen und rotatorischen Beschleunigungen des Projektors, des Kamerasystems und/oder des Messobjekts beim Aufnehmen der Bild-Sequenz. Diese gemessenen mittels der IMU gemessenen Beschleunigungen werden dann bei der rechnerischen Bestimmung der 3D-Koordinaten aus der aufgenommenen Bild-Sequenz berücksichtigt, sodass während der Aufnahme der Bilder-Sequenz auftretende Bewegungen (die etwa durch ein Unruhighalten des die Kameraanordnung und den Projektor integrierenden Messkopfes verursacht werden können) für die Bestimmung der 3D-Koordinaten rechnerisch kompensiert werden können.

Ausgehend von den im Stand der Technik gegebenen, oben genannten Nachteilen ist daher die der Erfindung zugrunde liegende technische Aufgabe ein Bereitstellen eines verbesserten, Bild-Sequenzen verwendenden optischen Messverfahrens und Messsystems zum Bestimmen von 3D-Koordinaten auf einer Messobjekt-Oberfläche, insbesondere wobei ein oder mehrere der zuvor beschriebenen Nachteile vermindert oder behoben werden können.

Spezifischere Aufgaben der Erfindung sind dabei das Ermöglichen einer präziseren Bestimmung von 3D-Koordinaten auch bei für aus dem Stand der Technik bekannte Messsysteme unzulänglicher Positionshaltigkeit des Projektors, des Kamerasystems und/oder des Messobjekts (z.B. durch unerwünschte Schwingungen, Vibrationen oder Unruhighalten) während des Messvorgangs (d.h. während des Mustersequenzprojizierens und der Bildsequenzaufnahme). Im Speziellen sollen dabei - zum einen - auf Verwackelungen und/oder Bewegungsunschärfen in den Einzelbildern einer Bild-Sequenz zurückzuführende Fehler oder Ungenauigkeiten in der Bestimmung der 3D-Koordinaten verringert werden können. Zum anderen sollen auch Fehler verringert oder eliminiert werden können, die auf bei Unruhighalten auftretenden Aufnahmepositions- und -richtungsschwankungen bei den Bildern einer Bild-Sequenz untereinander zurückzuführen sind.

Eine weitere spezifische Aufgabe - besonders bei Verwendung eines handgehaltenen Messsystems - ist eine vereinfachte Benutzerführung bei Durchführung einer Messung, insbesondere wobei die Gefahr vermindert werden soll, TeilFlächen der zu vermessenden Oberfläche aus Versehen bei der Messung ganz auszulassen oder unnötig viele, redundante Bilder einer selben Teil-Fläche aufzunehmen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein optisches Messverfahren zum Bestimmen von 3D-Koordinaten von einer Vielzahl von Messpunkten einer Messobjekt-Oberfläche.

Dafür erfolgen ein Beleuchten der Messobjekt-Oberfläche mit einer Muster-Sequenz aus unterschiedlichen Mustern durch einen Projektor, ein Aufnehmen einer Bild-Sequenz von der mit der Muster-Sequenz beleuchteten Messobjekt-Oberfläche mit einem Kamerasystem, und ein Bestimmen der 3D-Koordinaten der Messpunkte durch Auswerten der Bild-Sequenz, insbesondere wobei eine Folge von Helligkeitswerten für identische Messpunkte der Messobjekt-Oberfläche in jeweiligen Bildern der aufgenommenen Bild-Sequenz ermittelt wird.

Erfindungsgemäss werden dabei translatorische und/oder rotatorische Beschleunigungen des Projektors, des Kamerasystems und/oder des Messobjekts gemessen und in Abhängigkeit von den gemessenen Beschleunigungen das Beleuchten der Messobjekt-Oberfläche und/oder das Aufnehmen der Bild-Sequenz - insbesondere zeitlich im Wesentlichen unmittelbar und live während des Messvorgangs - reaktiv angepasst.

Gemäss eines Grundgedankens der Erfindung werden also - insbesondere anhand einer IMU ("Inertial Measuring Unit"; zu deutsch "Inertialsensoren" oder "Inertialmesseinheit") - während den Messungen auftretende (insbesondere ungewollt auftretende bzw. unvermeidbare geringfügige) Bewegungen des Projektors, des Kamerasystems und/oder des Messobjekts gemessen und zur aktiven unmittelbaren Einflussnahme auf den aktuellen Messvorgang herangezogen. D.h. dass zeitlich direkt und live auf ein Erfassen von (etwa durch den natürlichen Tremor einer Benutzerhand bedingten) Bewegungen von Komponenten des Messsystems reagiert wird und der aktuell laufende Messvorgang derart unmittelbar angepasst wird, dass der Einfluss der Bewegungen auf das Messergebnis möglichst gering gehalten und dabei dennoch der Messvorgang hinsichtlich eines effizienten Durchführens optimiert werden kann. Das zeitlich unmittelbar und live erfolgende Reagieren auf gemessene Bewegungen soll dabei so verstanden werden, dass eine allfällige Zeitverzögerung zwischen Detektion der Bewegungen und aktiver Umsetzung einer Anpassung des laufenden Messvorgangs im Wesentlichen nur durch die für das Ableiten einer entsprechenden Messvorgangs-Parameteranpassung benötigte Rechenzeit seitens einer elektronischen Auswerteeinheit bedingt ist.

Einige Beispiele dafür, inwiefern, welche und/oder auf welche Art Messvorgangs-Parameter des aktuell laufenden Messvorgangs live abhängig von den erfassten Beschleunigungen angepasst werden können, sowie wie im Speziellen bzw. auf welche Art die Beschleunigungen gemessen/erfasst werden können, werden im Folgenden näher erläutert.

Entsprechend eines speziellen Aspekts der Erfindung können dabei die Beschleunigungen des Projektors, des Kamerasystems bzw. des Messobjekts in allen sechs Freiheitsgraden gemessen werden und es kann das Messen der Beschleunigungen fortlaufend mit einer bestimmten Messrate, insbesondere zwischen etwa 1 und 2000 Hz, im Speziellen zwischen etwa 50 und 2000 Hz, zumindest während der Belichtungszeiten der einzelnen Bilder der Bild-Sequenz erfolgen, insbesondere während des gesamten Vorgangs des Beleuchtens der Messobjekt-Oberfläche und des Aufnehmens der Bild-Sequenz oder mehrerer Bild-Sequenzen. Entsprechend eines weiteren Aspekts der Erfindung kann abhängig von einem - während des Beleuchtens anhand der gemessenen Beschleunigungen - abgeleiteten aktuellen Dynamikgrad des Projektors, des Kamerasystems bzw. des Messobjekts - zeitlich im Wesentlichen unmittelbar reaktiv auf das Ableiten des jeweils aktuellen Dynamikgrads - die Muster-Sequenz angepasst werden, im Speziellen wobei
● eine Reihenfolge der nacheinander zu projizierenden, unterschiedlichen Mustern der Muster-Sequenz angepasst wird, im Speziellen derart, dass bei verhältnismässig hohem aktuellem Dynamikgrad jene Muster der Muster-Sequenz mit verhältnismässig geringem Feinheitsgrad und bei verhältnismässig geringem aktuellem Dynamikgrad jene Muster der Muster-Sequenz mit verhältnismässig hohem Feinheitsgrad projiziert werden, und/oder
● eine Helligkeit (d.h. Lichtstärke der zum Beleuchten vom Projektor emittierten optischen Strahlung) für die einzelnen zu projizierenden Muster angepasst wird, und/oder
● eine Projektionsdauer der einzelnen zu projizierenden Muster angepasst wird (z.B. Abwarten mit Projektion des nächsten Musters bei aktuell starken Bewegungen [aktuell hohem Dynamikgrad]), und/oder
● Projektionszeitpunkte der einzelnen zu projizierenden Muster angepasst werden, und/oder
● ein Feinheits- und/oder Strukturierungsgrad der einzelnen zu projizierenden Muster angepasst werden, und/oder
● ein einzelnes Muster der Muster-Sequenz derart während der Projektion desselben angepasst wird, dass die dadurch auf der Messobjekt-Oberfläche (1s) erzeugte Beleuchtungsstruktur - zumindest während der Belichtungszeit des zur Erfassung der mit diesem Muster beleuchteten Messobjekt-Oberfläche (1s) vorgesehenen Bildes der Bild-Sequenz - lagestabil auf der Messobjekt-Oberfläche (1s) gehalten wird, und/oder
● eine Flächenabdeckung und/oder Grösse der einzelnen zu projizierenden Muster angepasst werden,
   -> wobei unter "Flächenabdeckung" hierbei verstanden wird: Dichte der Projektion, sodass z.B. bei hohem Dynamikgrad ein Muster mit geringerer Dichte, jedoch mit höherer Lichtstärke projiziert wird -> dadurch geringere Projektions- und Belichtungsdauern möglich bei dennoch eingehaltenen Augenschutzbestimmungen) ;
   -> wobei unter "Grösse" hierbei verstanden wird: die durch die Grenzen eines Musters eingeschlosse Fläche [z.B. Projizieren mit geringerem Divergenzwinkel oder z.B. einfach nur eine Hälfte des eigentlichen Musters wird projiziert (im einfachen Fall z.B. durch eine halbverdeckende Blende)]
   und/oder
● eine Wellenlänge der zum Beleuchten verwendeten optischen Strahlung für die einzelnen zu projizierenden Muster angepasst wird.

Entsprechend eines weiteren Aspekts der Erfindung kann abhängig von einem - während des Beleuchtens anhand der gemessenen Beschleunigungen - abgeleiteten aktuellen Dynamikgrad des Projektors, des Kamerasystems bzw. des Messobjekts - zeitlich im Wesentlichen unmittelbar reaktiv auf das Ableiten des jeweils aktuellen Dynamikgrads - die Bild-Sequenz angepasst werden, im Speziellen wobei
● ein jeweiliger Körnungsgrad für die einzelnen aufzunehmenden Bilder angepasst wird, und/oder
● eine jeweilige Belichtungsdauer für die einzelnen aufzunehmenden Bilder angepasst wird, und/oder
● Aufnahmezeitpunkte der einzelnen aufzunehmenden Bilder angepasst werden, und/oder
● ein jeweiliger Erfassungsbereich für die einzelnen aufzunehmenden Bilder angepasst wird, und/oder
● eine jeweilige Blendenöffnungsweite für die einzelnen aufzunehmenden Bilder angepasst wird.

Zusammengefasst können also das projizierte Muster und/oder Bildaufnahme-Parameter dem Messobjekt dynamisch angepasst werden, insbesondere wenn die räumliche Lage des Messobjekts grob bekannt ist und ein (Soll-)CAD-Model für das Messobjekt in das Messsystem eingegeben wird. Die Bestimmung der Lage des Messobjekts zum Messsystem kann zunächst grob anhand der ersten Messergebnisse erfolgen. Das Messmuster kann dann so in Echtzeit berechnet werden, dass während der Messung die gewünschten Auflösungen an vor der Messung bestimmten Positionen erreicht werden. Die benötigten Messmuster können auch vor der Messung berechnet werden und im Messsystem abgespeichert werden. Dieses Vorgehen könnte die notwendige Rechenleistung im Messsystem minimieren.

Entsprechend eines weiteren Aspekts der Erfindung können auch abhängig von den gemessenen Beschleunigungen, im Speziellen abhängig von davon abgeleiteten aktuellen Lagen und Orientierungen des Projektors, des Kamerasystems bzw. des Messobjekts (sowie insbesondere zusätzlich abhängig von zumindest grob bekannten oder zuvor zumindest grob bestimmten 3D-Koordinaten der Messobjekt-Oberfläche), aktuelle Messfortschritts- und/oder Messvorgangsadaptionsparameter abgeleitet werden. Diese können dann zur Benutzerführung und Optimierung des Messvorgangs auf die Messobjekt-Oberfläche projiziert werden, beispielsweise wobei folgende Informationen als die Messfortschritts- bzw. Messvorgangsadaptionsparameter projiziert werden:
● eine Messrichtung, in die der Projektor und/oder das Kamerasystem im Rahmen des weiteren Messvorgangs auszurichten sind, und/oder
● eine Messposition, die durch den Projektor und/oder das Kamerasystem im Rahmen des weiteren Messvorgangs einzunehmen sind, und/oder
● Haltedauern, während welchen der Projektor und/oder das Kamerasystem möglichst ruhig in einer gleich bleibenden Messrichtung und position zu halten sind, und/oder
● ein anhand der gemessenen Beschleunigungen abgeleiteter aktueller Dynamikgrad des Projektors, des Kamerasystems bzw. des Messobjekts, im Speziellen wobei angegeben wird ob eine vordefinierte Dynamikgradobergrenze aktuell eingehalten wird oder nicht.

Zusammengefasst können also die anhand der IMU-gemessenen Beschleunigungen abgeleiteten Positions- und Orientierungswerte verwendet werden, um zwischen einzelnen Messungen den relativen räumlichen Bezug zu bestimmen (mit verhältnismässig hoher Messrate, wie etwa zwischen 50 und 2000 Hz) und eine Verknüpfung der Messungen in allen sechs Freiheitsgraden zu ermöglichen. Anhand dieser Positionswerte kann der Projektor verwendet werden, um - im sichtbaren Spektralbereich - Zusatzinformationen auf das Messobjekt zu projizieren, die dem Bediener während oder zwischen Messungen bereitgestellt werden sollen ("Guidance"). Die Lage der zu projizierenden Information auf der Objektoberfläche wird dabei anhand der IMU-Positionswerte in Echtzeit berechnet.

Es können beispielsweise Bereiche auf dem Messobjekt angezeigt werden, an denen das Messsystem aufgrund der aktuellen Ausrichtung keine Messwerte aufnehmen kann. Dies kann beispielsweise durch ungünstige Reflektionseigenschaften der Messobjektoberfläche entstehen. Nach dem Stand der Technik müssen derartige Oberflächen behandelt werden. Dies kann durch Aufrauen oder durch Bestreuen mit einem Puder erfolgen. Diese Massnahmen führen zu einer räumlich breiteren Rückstreuung und somit einer geringeren Abhängigkeit der Messergebnisse vom Projekts- und Detektionswinkel zur Messobjektoberfläche. Der Puder hat eine nicht eindeutig definierte Dicke und kann somit die Genauigkeit der Messergebnisse beinträchtigen oder im weiteren Verarbeitungsprozess störend sein.

Um die Objektoberfläche ohne solche Hilfsmittel vollständig zu erfassen, muss das Objekt aus verschiedenen Perspektiven aufgenommen werden und die Aufnahmen müssen miteinander verknüpft werden ("Stitching"). Dazu kann der Nutzer erfindungsgemäss anhand der projizierten Zusatzinformation optimiert geführt werden. Ausser dem Anzeigen nicht anmessbarer Oberflächenbereiche kann ebenfalls die Bewegungsrichtung zum zeitoptimierten Scannen des Messobjekts durch Pfeile oder vergleichbare Richtungssignale projiziert werden ("Guidance"). Beispielsweise können:
- die Zusatzinformationen für den Nutzer zwischen den Messungen projiziert werden, und/oder
- die Zusatzinformationen für den Nutzer dem projizierten Muster überlagert werden.

Die Zusatzinformationen können dabei spektral von dem Mess-Muster getrennt sein oder sie können auch in dem projizierten Mess-Muster enthalten sein.

Einige der projizierten Zusatzinformationen setzen ein CAD-Modell des Messobjekts und dessen Lage zum Projektor voraus. Die Lage des Messobjekts kann dabei beispielsweise aus den ersten Messungen grob bestimmt werden (etwa anhand von anmessbaren Referenzmarken am Objekt oder dem "Match" von CAD-Model und ersten Messungen zumindest grob erhaltenen Messwerten).

Die Positions- und Orientierungsbestimmung erlaubt dabei nicht nur eine Nutzerführung, wo und von welcher Perspektive aus noch gemessen werden muss, sondern auch eine Optimierung des Messablaufs (Pfadoptimierung).

Ein weiterer Gegenstand der Erfindung ist - den Kerngedanken der erfindungsgemässen Lehre analog zu dem vorherig beschriebenen erfindungsgemässen Verfahren aufgreifend - ein optisches Messsystem zur Bestimmung von 3D-Koordinaten einer Vielzahl von Messpunkten einer Messobjekt-Oberfläche, mit
● einem Projektor zur Beleuchtung der Messobjekt-Oberfläche mit einer Muster-Sequenz aus unterschiedlichen optischen Mustern,
● einem Kamerasystem zur Aufnahme einer Bild-Sequenz von der mit der Muster-Sequenz beleuchteten Messobjekt-Oberfläche und
● einer Auswerteeinheit zur Bestimmung der 3D-Koordinaten der Messpunkte aus der Bild-Sequenz, insbesondere unter Ermittlung einer Folge von Helligkeitswerten für identische Messpunkte der Messobjekt-Oberfläche in jeweiligen Bildern der aufgenommenen Bild-Sequenz.

Erfindungsgemäss sind dabei am Projektor, am Kamerasystem und/oder am Messobjekt Inertialsensoren angeordnet zur Messung von translatorischen und/oder rotatorischen Beschleunigungen des Projektors, des Kamerasystems und/oder des Messobjekts. Zudem ist - analog zum oben beschriebenen erfindungsgemässen Verfahren - die Auswerteeinheit nun ausgebildet zur Bewirkung einer in Abhängigkeit von den gemessenen Beschleunigungen, insbesondere zeitlich im Wesentlichen unmittelbar und live während des Messvorgangs, reaktiv erfolgenden Anpassung der durch den Projektor erzeugten Beleuchtung der Messobjekt-Oberfläche und/oder der durch das Kamerasystem erfolgenden Aufnahme der Bild-Sequenz.

Die oben bereits das erfindungsgemässe Verfahren weiterbildenden bzw. beispielhaft näher beschreibenden Merkmale sind dabei ebenso auf das erfindungsgemässe optische Messsystem analog anwendbar und können somit auch analog zur Weiterbildung bzw. zur näheren Spezifizierung des erfindungsgemässen optischen Messsystems herangezogen werden.

Das erfindungsgemässe Verfahren und das erfindungsgemässe Messsystem werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

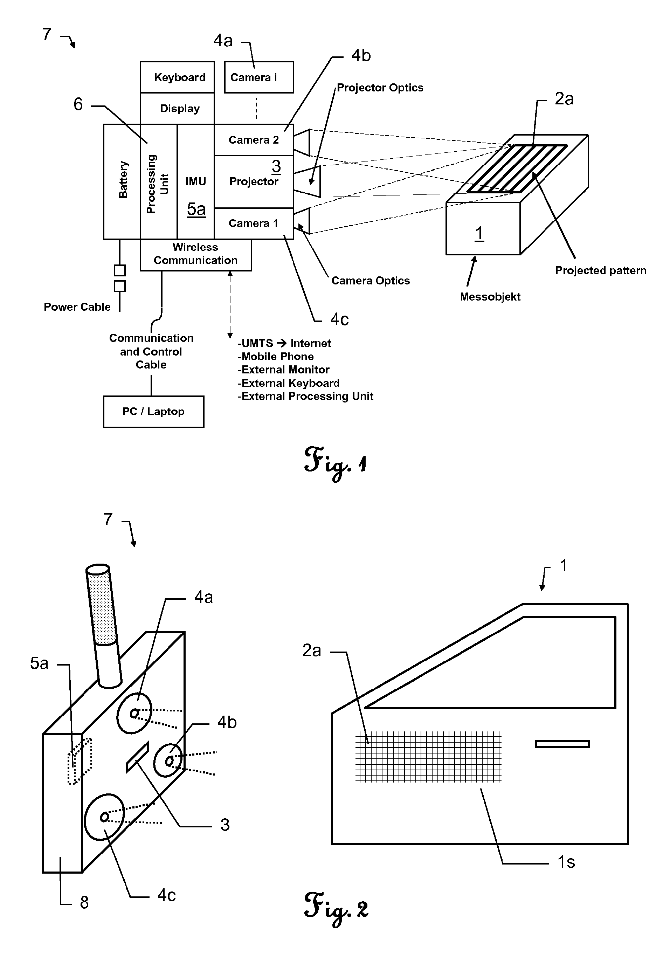

- Fig. 1: ein optisches Messsystem zur Bestimmung von 3D-Koordinaten, wobei erfindungsgemäss eine inertiale Messeinheit (IMU) in den handhaltbaren Messkopf integriert ist;
- Fig. 2: ein erfindungsgemässes optisches Messsystem mit handhaltbarem und IMU, Projektor sowie drei Kameras aufweisendem Messkopf, wobei eine Autotüre als Messobjekt im Rahmen der 3D-Koordinatenbestimmung mit einem Muster beleuchtet wird;

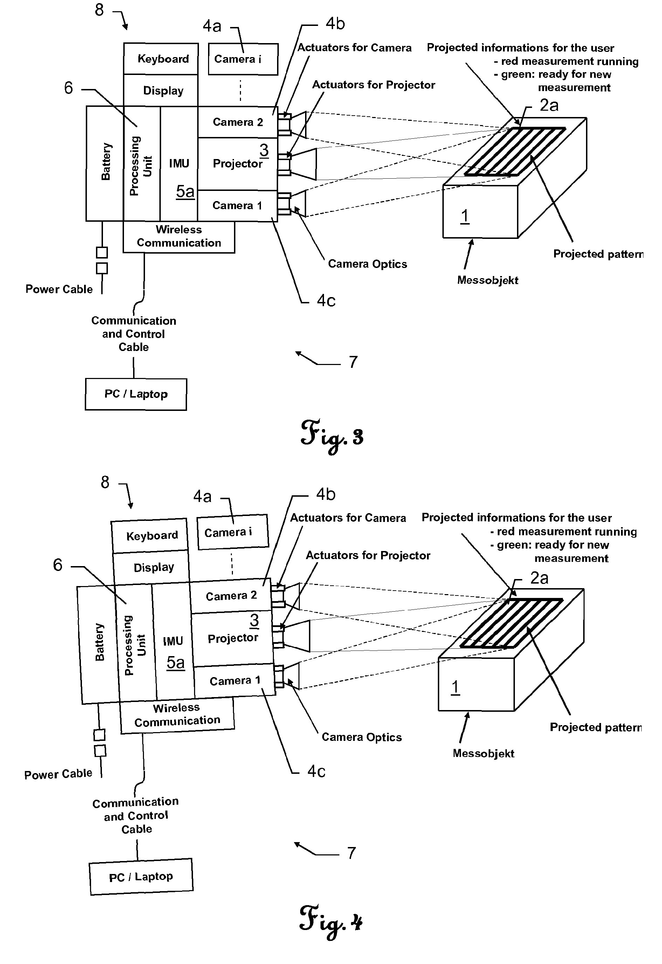

- Fig. 3 bis 5: ein erfindungsgemässes optisches Messsystem mit einem handhaltbaren und IMU, Projektor sowie Kameras aufweisenden Messkopf, wobei ein Stellmechanismus für den Projektor (und/oder Kameras) vorhanden ist, mit welchem abhängig von den IMU-gemessenen Beschleunigungen die Projektionsrichtung und/oder -position (bzw. die Aufnahmerichtung und/oder -Position) relativ zum Messkopfgehäuse anpasst werden kann, sodass unerwünschte kleinere Bewegungen des Messkopfes letztendlich am Projektor (bzw.

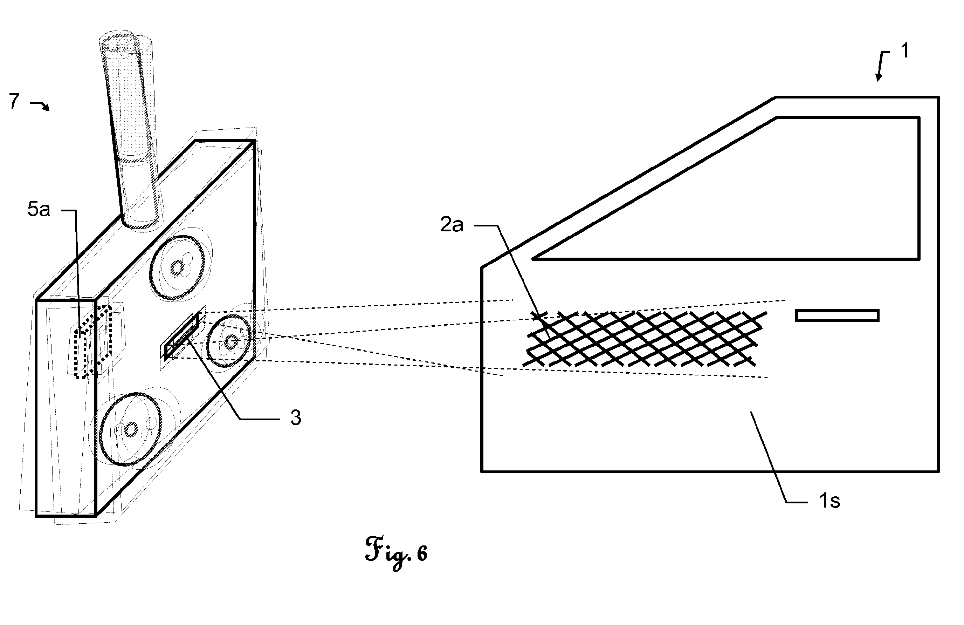

- Fig. 6: den Kameras) kompensiert werden können; ein erfindungsgemässes optisches Messsystem, wobei die Projektion (also das ausgesendete Muster) selbst derart live angepasst wird, dass trotz Bewegungen seitens des Messkopfes auf der Messobjekt-Oberfläche ein positionsfestes, lagestabiles und gleich bleibendes Muster erzeugt wird;

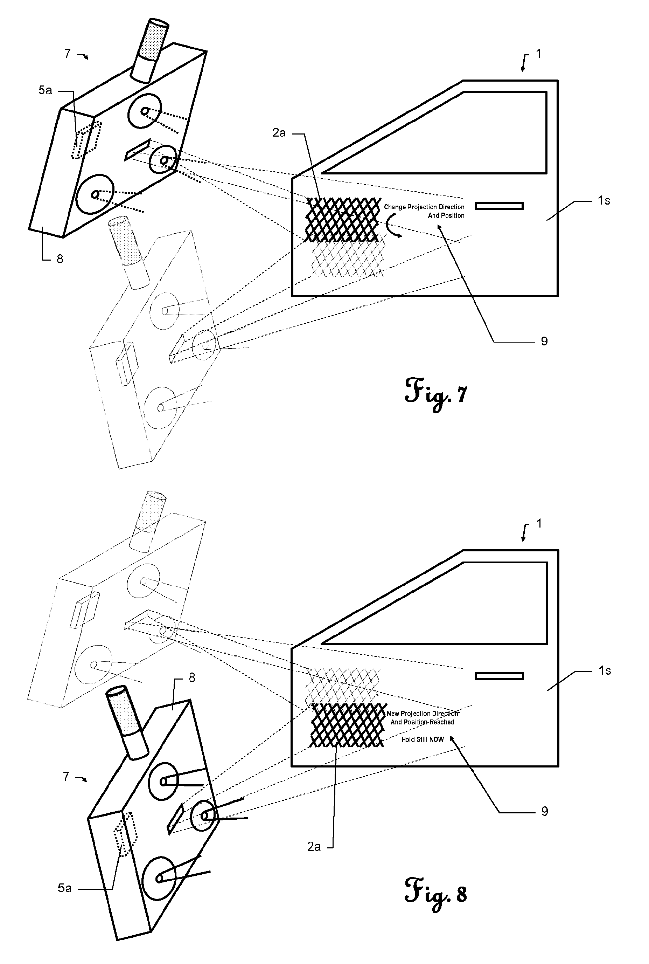

- Fig. 7 und 8: ein erfindungsgemässes optisches Messsystem mit handhaltbarem Messkopf, wobei - abhängig vom Output der Inertialmesssensoren - aktuelle Messfortschritts- und/oder Messvorgangsadaptionsparameter abgeleitet werden und diese zur Benutzerführung und Optimierung des Messvorgangs auf die Messobjekt-Oberfläche projiziert werden;

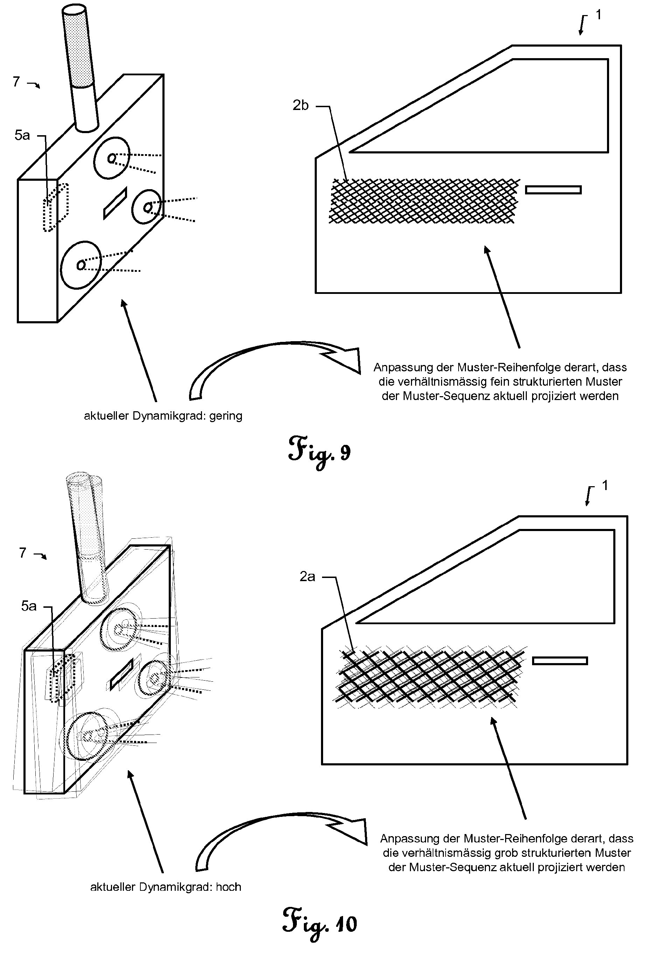

- Fig. 9 bis 11: Beispiele für eine - abhängig von einem anhand der durch die IMU gemessenen Beschleunigungen abgeleiteten aktuellen Dynamikgrad des den Projektor und das Kamerasystem integrierenden Messkopfes - aktive Echtzeit-Adaption der Muster-Sequenz und/oder der Bild-Sequenz des laufenden Messvorgangs; und

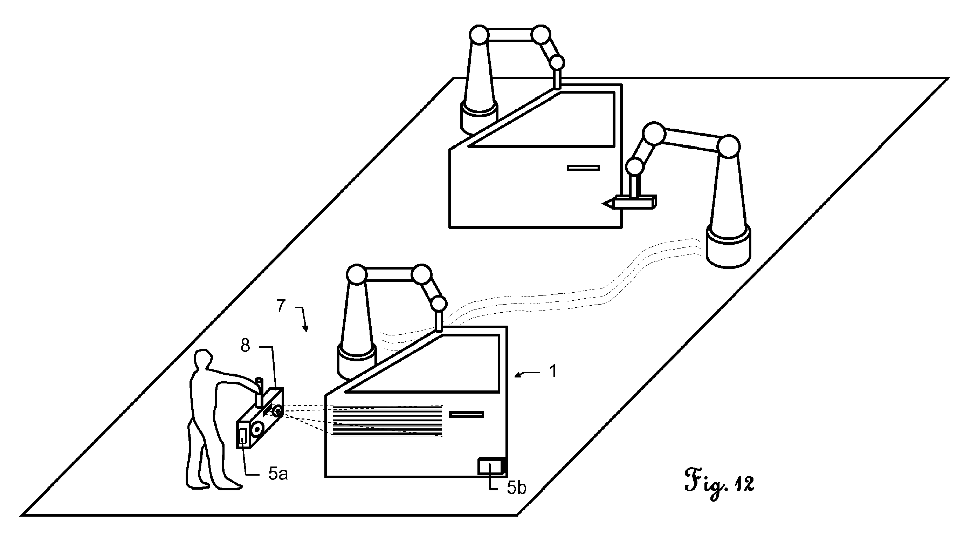

- Fig. 12: ein erfindungsgemässes optisches Messsystem in Anwendung in einer Produktionsstrasse, wobei auf die sich auf Messungen mit dem erfindungsgemässen Messsystem auswirkenden Vibrationen, die von einer benachbarten Produktionsstation übertragen werden, anhand der gemessenen Beschleunigungen reagiert wird und eine aktive Live-Adaption des laufenden Messvorgangs erfolgt.

Das in Figur 1 dargestellte optische Messsystem 7 zur Bestimmung von 3D-Koordinaten von einer Vielzahl von Messpunkten einer Messobjekt-Oberfläche 1s weist erfindungsgemäss einen Projektor 3, ein Kamerasystem 4, eine Auswerteeinheit 6 sowie in eine inertiale Messeinheit (IMU) integrierte Inertialsensoren 5a auf.

Der Projektor 3 ist dabei zur Beleuchtung der Messobjekt-Oberfläche 1s mit einer Muster-Sequenz aus unterschiedlichen optischen Mustern 2a ausgebildet. Beispielsweise kann der Musterprojektor 3 ähnlich dem Prinzip eines Diaprojektors aufgebaut sein. Es können jedoch auch andere Projektionstechniken zur Erzeugung der Lichtmuster 2a eingesetzt werden, beispielsweise programmierbare LCD-Projektoren, verschiebliche Glasträger mit unterschiedlichen Gitterstrukturen in einem Projektor, eine Kombination eines elektrisch schaltbaren Gitters und einer mechanischen Verschiebeeinrichtung oder auch die Projektion von Einzelgittern auf der Basis von Glasträgern.

Das Kamerasystem 4 ist zur Aufnahme einer Bild-Sequenz von der mit der Muster-Sequenz beleuchteten Messobjekt-Oberfläche 1s ausgebildet und kann dabei zumindest eine Kamera aufweisen, insbesondere jedoch zwei, drei oder vier Kameras 4a,4b,4c, die beispielsweise mit fixer und bekannter Positionierung und Orientierung relativ zueinander angeordnet sein können und im Speziellen zur im Wesentlichen simultan erfolgenden Aufnahme von Einzelbildern ausgebildet sind.

Wie dem Fachmann bekannt können zur Bildaufzeichnung beispielsweise Kameras 4a,4b,4c mit elektronischem Bildsensor, z.B. CCD- oder CMOS-Sensoren, verwendet werden, welche die Bildinformation in Form einer Bildmatrix für die weitere Verarbeitung zur Verfügung stellen. Es können dabei sowohl monochrome Kameras als auch Farbkameras zum Einsatz kommen.

Die Auswerteeinheit 6 ist zur Bestimmung der 3D-Koordinaten der Messpunkte aus der Bild-Sequenz ausgebildet, insbesondere unter Ermittlung einer Folge von Helligkeitswerten für identische Messpunkte der Messobjekt-Oberfläche 1s in jeweiligen Bildern der aufgenommenen Bild-Sequenz.

Der Projektor 3 und das Kamerasystem 4 sind ausführungsbeispielgemäss mit fixer und bekannter Positionierung und Orientierung relativ zueinander körperlich in einem gemeinsamen Messkopf 8 des Messsystems 7 untergebracht, insbesondere wobei der Messkopf 8 handhaltbar und/oder zum Anbringen an einen Roboterarm ausgebildet ist.

Erfindungsgemäss ist die Auswerteeinheit 6 ausgebildet zur Bewirkung einer in Abhängigkeit von den gemessenen Beschleunigungen - insbesondere zeitlich im Wesentlichen unmittelbar und live während des Messvorgangs - reaktiv erfolgenden Anpassung der durch den Projektor 3 erzeugten Beleuchtung der Messobjekt-Oberfläche 1s und/oder der durch das Kamerasystem 4 erfolgenden Aufnahme der Bild-Sequenz.

Insbesondere ist Auswerteeinheit 6 dabei derart zur Steuerung des Projektors 3 und/oder des Kamerasystems 4 ausgebildet, dass abhängig von einem während des Messvorgangs anhand der gemessenen Beschleunigungen abgeleiteten aktuellen Dynamikgrad des Projektors 3 bzw. des Kamerasystems 4 live eine Anpassung der durch den Projektor 3 erzeugten Beleuchtung der Messobjekt-Oberfläche 1s bzw. der durch das Kamerasystem 4 erfolgenden Aufnahme der Bild-Sequenz erfolgt.

Die Inertialsensoren 5a der inertialen Messeinheit können dabei insbesondere auf MEMS-basierten Komponenten basieren und derart kombiniert und in die IMU integriert sein, dass die diese zur Messung der Beschleunigungen in allen sechs Freiheitsgraden ausgebildet ist, insbesondere mit einer Messrate etwa zwischen 1 und 2000 Hz, im Speziellen zwischen 50 und 2000 Hz.

Insbesondere automatisch und vorprogrammiert gesteuert durch die Auswerteeinheit 6 kann somit das dargestellte optische Messsystem 7 zur Durchführung des erfindungsgemässen optischen Messverfahrens - wie bereits obig beschrieben - ausgebildet und ausgelegt sein.

Das in Figur 2 gezeigte Ausführungsbeispiel eines erfindungsgemässen optischen Messsystems 7 weist einen handhaltbaren und IMU (mit Inertialsensoren 5a),
Projektor 3 sowie drei Kameras 4a,4b,4c umfassenden Messkopf 8 (z.B. integriert in ein handhaltbares Gehäuse mit Griff und somit als Lichtstrukturen-3D-Handscanner ausgebildet) auf, wobei eine Autotüre als Messobjekt 1 im Rahmen der 3D-Koordinatenbestimmung anhand des Projektors 3 mit einem Muster 2a (als Teil einer Muster-Sequenz) beleuchtet wird.

Die drei Kameras 4a,4b,4c des Kamerasystems 4, die hier beispielhaft mit fixer und bekannter Positionierung und Orientierung relativ zueinander angeordnet sind, sind zur Aufnahme einer Bild-Sequenz von der mit der Muster-Sequenz beleuchteten Autotür-Oberfläche ausgebildet. Die Kameras 4a,4b,4c können dabei zur im Wesentlichen simultan erfolgenden Aufnahme von Einzelbildern ausgebildet sein.

Zudem ist wiederum eine inertiale Messeinheit (mit Inertialsensoren 5a) in den Messkopf 8 integriert, wodurch ein erfindungsgemässes Live-Anpassen des aktuellen Messvorgangs (insbesondere der Muster-Projektionen oder hinsichtlich einer zu projizierenden Benutzerführungs-Information) abhängig von den fortlaufend gemessenen Beschleunigungen (oder davon abgeleiteten aktuellen Relativpositionen) erfolgen kann.

Figuren 3 bis 5 illustrieren einen Messkopf 8 des Messsystems 7, welcher einen Stellmechanismus (mit einzelnen Stellelementen) für Projektor 3 und/oder Kameras 4a-4c (dabei entweder für Projektor und die jeweiligen Kameras komplett oder zumindest für deren Optiken) aufweist, sodass abhängig von den anhand der
IMU 5a gemessenen Beschleunigungen des Gehäuses im Wesentlichen in Echtzeit die Projektionsrichtung und/oder die Projektionsquellenposition des Projektors 3 (bzw. die Kamerablickrichtung und/oder die Kamerapositionen) derart relativ zum Gehäuse angepasst werden, dass - etwa durch vibrationsbedingtes oder handtremorbedingtes Unruhighalten verursachte - Gehäuse-Bewegungen kompensiert werden und somit das auf die Messobjekt-Oberfläche projizierte Muster 2a zumindest während der Belichtungszeit von jeweils einzelnen Bildern der Bild-Sequenz im Wesentlichen stabil (also positionsfest auf der Messobjekt-Oberfläche) gehalten wird.

Figur 6 zeigt - z.B. alternativ zu der in den Figuren 3 und 4 dargestellten Möglichkeit mit Stellmechanismus - einen Messkopf 8 des Messsystems 7, wobei eine Live-Anpassung der Projektion selbst (d.h. während der Projektion eines einzelnen Musters der Muster-Sequenz) derart abhängig von den anhand der IMU 5a gemessenen Beschleunigungen erfolgt, dass - trotz Bewegung des Messkopfes - das auf der Messobjekt-Oberfläche erscheinende Muster (d.h. das auf die Messobjekt-Oberfläche hinprojizierte Muster) lagestabil auf der Messobjekt-Oberfläche verbleibt (zumindest während der Belichtungszeit von jeweils eines einzelnen Bilds der Bild-Sequenz).

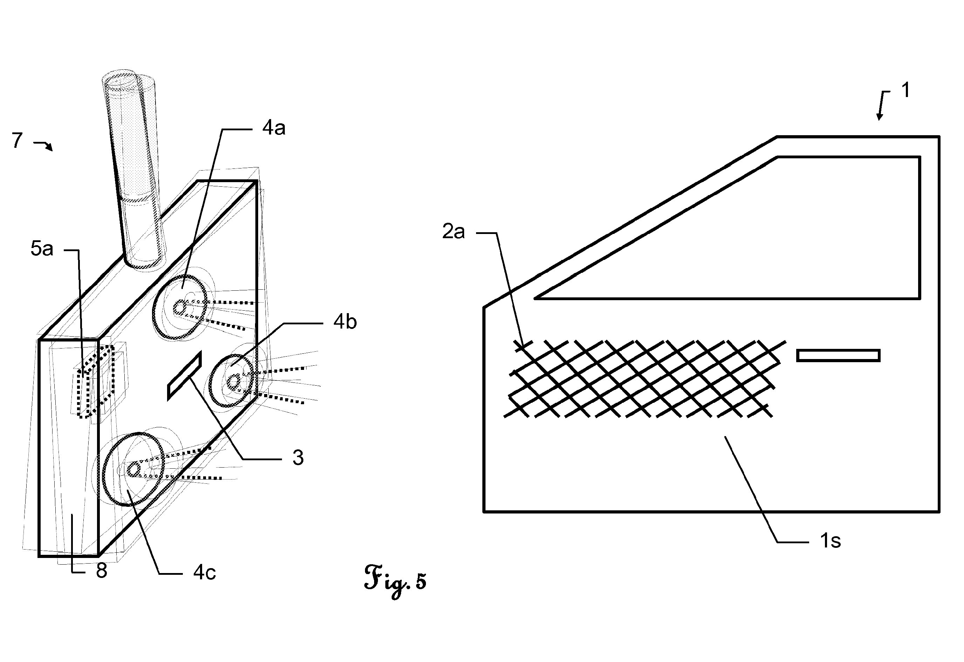

Dabei muss bei der Ausführungsvariante gemäss Figur 6 - anders als bei jener gemäss Figur 5 - allerdings berücksichtigt werden, dass die Projektion ggf. nicht im gesamten möglichen Projektionsöffnungswinkel des Projektors 3 erfolgen sollte, da ansonsten - d.h. bei (z.B. durch handtremorbedingtes Unruhighalten verursachten) stärkeren Bewegungen des Messkopfes - das auf die Messobjekt-Oberfläche letztendlich projizierte Muster in Randbereichen nicht aufrechterhalten werden kann.

Bei der Ausführungsvariante gemäss den Figuren 7 und 8 werden
- abhängig von den anhand der IMU 5a gemessenen Beschleunigungen, im Speziellen abhängig von davon abgeleiteten aktuellen Lagen und Orientierungen des Messkopfes 8 des Messsystems 7,
- sowie insbesondere zusätzlich abhängig von zumindest grob bekannten oder zuvor zumindest grob bestimmten 3D-Koordinaten der Messobjekt-Oberfläche 1s,
aktuelle Messfortschritts- und/oder
Messvorgangsadaptionsparameter 9 abgeleitet und diese zur Benutzerführung und Optimierung des Messvorgangs auf die Messobjekt-Oberfläche 1s projiziert.

Wie in Figur 7 beispielhaft illustriert können dabei etwa Informationen bezüglich
- einer Messrichtung, in die der Projektor und/oder das Kamerasystem (bzw. der Messkopf 8) im Rahmen des weiteren Messvorgangs auszurichten sind, und/oder
- einer Messposition, die durch den Projektor und/oder das Kamerasystem (bzw. der Messkopf 8) im Rahmen des weiteren Messvorgangs einzunehmen sind,
als die Messfortschritts- bzw. Messvorgangsadaptionsparameter 9 auf die Messobjekt-Oberfläche 1s projiziert werden.

Wie in Figur 8 beispielhaft gezeigt können auch solche weitere Informationen als die Messfortschritts- bzw. Messvorgangsadaptionsparameter 9 auf die Messobjekt-Oberfläche projiziert werden, die sich etwa auf einen Zeitpunkt, ab wann der Messkopf 8 möglichst ruhig in einer gleich bleibenden Messrichtung und -position zu halten sind, beziehen.

Alternativ können ausserdem Informationen etwa hinsichtlich
- Haltedauern, während welchen der Projektor und/oder das Kamerasystem (bzw. der Messkopf) möglichst ruhig in einer gleich bleibenden Messrichtung und position zu halten sind, und/oder
- eines anhand der gemessenen Beschleunigungen abgeleiteten aktuellen Dynamikgrads des Projektors, des Kamerasystems (bzw. des Messkopfes) und/oder des Messobjekts (im Speziellen wobei zudem angegeben werden kann, ob eine vordefinierte Dynamikgradobergrenze aktuell eingehalten wird oder nicht),
als die Messfortschritts- bzw. Messvorgangsadaptionsparameter projiziert werden.

Figuren 9 bis 11 illustrieren beispielhaft den erfindungsgemässen speziellen Aspekt einer - abhängig von einem während des Beleuchtens anhand der durch die IMU 5a gemessenen Beschleunigungen abgeleiteten aktuellen Dynamikgrad des den Projektor und das Kamerasystem integrierenden Messkopfes des Messsystems 7 - Anpassung der Muster-Sequenz und/oder der Bild-Sequenz (wobei eine Anpassung der Muster-Sequenz - wie dem Fachmann verständlich - oft zusammen und in Einklang mit einer entsprechende Anpassung der Bild-Sequenz zu erfolgen hat, um die gewünschte Wirkung zu erzielen).

Das Anpassen der Muster-Sequenz und/oder der Bild-Sequenz erfolgt erfindungsgemäss dabei zeitlich im Wesentlichen unmittelbar reaktiv auf das Ableiten des jeweils aktuellen Dynamikgrads.

Wie in den Figuren 9 und 10 ersichtlich, kann beispielsweise eine Reihenfolge der nacheinander zu projizierenden, unterschiedlichen Mustern der Muster-Sequenz angepasst werden, im Speziellen derart, dass bei verhältnismässig hohem aktuellem Dynamikgrad jene Muster der Muster-Sequenz mit verhältnismässig geringem Feinheitsgrad (siehe Figur 10) und bei verhältnismässig geringem aktuellem Dynamikgrad jene Muster der Muster-Sequenz mit verhältnismässig hohem Feinheitsgrad (siehe Figur 9) projiziert werden.

Zudem kann (zusätzlich oder alternativ) abhängig vom aktuellen Dynamikgrad eine folgende Massnahmen hinsichtlich der Muster-Sequenz zeitlich im Wesentlichen unmittelbar reaktiv auf das Ableiten des jeweils aktuellen Dynamikgrads getroffen werden
- Anpassen von der Helligkeit der einzelnen zu projizierenden Muster, und/oder
- Anpassen von der Projektionsdauer der einzelnen zu projizierenden Muster, und/oder
- Anpassen von den Projektionszeitpunkten der einzelnen zu projizierenden Muster, und/oder
- Anpassen von dem Feinheits- und/oder Strukturierungsgrad der einzelnen zu projizierenden Muster, und/oder
- Anpassen von einem einzelnen Muster der Muster-Sequenz derart während der Projektion desselben, dass die dadurch auf der Messobjekt-Oberfläche erzeugte Beleuchtungsstruktur - zumindest während der Belichtungszeit des zur Erfassung der mit diesem Muster beleuchteten Messobjekt-Oberfläche (1s) vorgesehenen Bildes der Bild-Sequenz - lagestabil auf der Messobjekt-Oberfläche gehalten wird (wie bereits beschrieben in Zusammenhang mit Figur 6), und/oder
- Anpassen von der Flächenabdeckung und/oder Grösse der einzelnen zu projizierenden Muster, und/oder
- Anpassen von der Wellenlänge der zum Beleuchten verwendeten optischen Strahlung für die einzelnen zu projizierenden Muster.

Entweder in Einklang mit einer Massnahme zur Anpassung der Muster-Sequenz (wobei die jeweiligen sich entsprechenden und vornehmlich in Kombination miteinander zu treffenden Massnahmen für den Fachmann selbsterklärend sind und daher hier keiner detaillierten Erklärung bedürfen) oder auch unabhängig von getroffenen Anpassungen der Muster-Sequenz können hinsichtlich der Anpassung der Bild-Sequenz beispielhaft folgende Massnahmen ebenso zeitlich im Wesentlichen unmittelbar reaktiv auf das Ableiten des jeweils aktuellen Dynamikgrads getroffen werden
- Anpassen von einem jeweiligen Körnungsgrad für die einzelnen aufzunehmenden Bilder, und/oder
- Anpassen von einer jeweiligen Belichtungsdauer für die einzelnen aufzunehmenden Bilder, und/oder
- Anpassen von Aufnahmezeitpunkten der einzelnen aufzunehmenden Bilder, und/oder
- Anpassen von einem jeweiligen Erfassungsbereich für die einzelnen aufzunehmenden Bilder, und/oder
- Anpassen von einer jeweiligen Blendenöffnungsweite für die einzelnen aufzunehmenden Bilder.

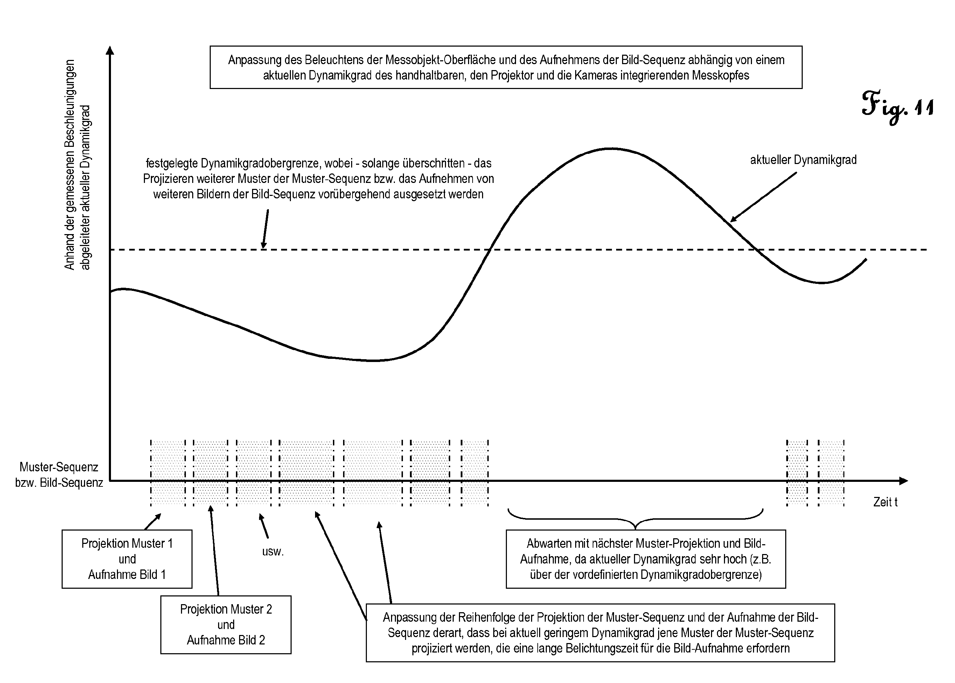

Figur 11 zeigt - rein zur weiteren Illustrierung des Prinzips - ein konkretes Beispiel für einen fortlaufend anhand der (durch die IMU gemessenen) Beschleunigungen abgeleiteten aktuellen Dynamikgrad des handhaltbaren, den Projektor und die Kameras integrierenden Messkopfes, wobei der aktuelle Dynamikgrad im Diagramm über der Zeit aufgetragen ist. Dabei erfolgt - abhängig vom jeweils aktuellen Dynamikgrad - eine direkte, unmittelbare (d.h. im Wesentlichen in Echtzeit vorgenommene) Anpassung des Beleuchtens der Messobjekt-Oberfläche und des Aufnehmens der Bild-Sequenz.

Abhängig von diesem aktuellen Dynamikgrad wird etwa live die Reihenfolge der zu projizierenden Muster einer Muster-Sequenz angepasst und beispielsweise bei einem aktuell geringen Dynamisierungsgrad jene Muster "vorgezogen" und dann projiziert, welchen eine geringe Projektions- und Bildaufnahmedauer zugeordnet ist. Bei aktuell hohem Dynamisierungsgrad werden dann jene Muster der Muster-Sequenz auf die Messobjekt-Oberfläche projiziert, die eine längere Bildaufnahmedauer (seitens der Kamera) erfordern und beispielsweise einen hohe Feinheit aufweisen. Es kann also - mit anderen Worten - eine Echtzeit-Anpassung der Reihenfolge der Projektion der Muster-Sequenz und der Aufnahme der Bild-Sequenz derart erfolgen, dass bei aktuell geringem Dynamikgrad jene Muster der Muster-Sequenz projiziert werden, die eine lange Belichtungszeit für die Bild-Aufnahme erfordern und vice versa.

Zudem kann optional auch eine Dynamikgradobergrenze festgelegt sein, wobei - solange diese überschritten wird - das Projizieren weiterer Muster der Muster-Sequenz bzw. das Aufnehmen von weiteren Bildern der Bild-Sequenz vorübergehend ausgesetzt werden.

Solange der Messkopf verhältnismässig starke Bewegungen ausführt und somit aktuell eine hohe Dynamik aufweist (und die festgelegte Dynamikgradobergrenze übersteigt), kann mit der nächsten Muster-Projektion und Bild-Aufnahme abgewartet werden.

Dadurch können durch nicht hinlängliches Ruhighalten des Messkopfes bedingte Messfehler verhindert oder zumindest vermindert werden.

Figur 12 zeigt ein erfindungsgemässes optisches Messsystem 7 in Anwendung in einer Produktionsstrasse, wobei sich Vibrationen auf Messungen mit dem erfindungsgemässen Messsystem 7 auswirken, die von einer benachbarten Produktionsstation übertragen werden.

Erfindungsgemäss wist nun das optische Messsystem 7 eine am Messobjekt 1 angeordnete IMU (mit Inertialsensoren 5b) auf. Zusätzlich zu der IMU (mit Inertialsensoren 5b) am Messobjekt 1 kann auch wiederum im Messkopf 8 selbst (der hier rein beispielhaft zwei Kameras aufweist) eine IMU (mit Inertialsensoren 5a) integriert sein. Dadurch kann nun auf während der Messung sowohl seitens des Messkopfes 8 als auch seitens des Messobjekts 1 auftretende Bewegungen (die z.B. durch auf den Roboterarm aus der Messbereichumgebung übertragene Vibrationen und durch Unruhighalten des Messkopfes 8 bewirkt werden) erfindungsgemäss - wie oben eingehend beschrieben - live reagiert werden und reaktiv eine Adaption (im Wesentlichen in Echtzeit) des aktuell laufenden Messvorgangs vorgenommen werden.

Wie oben bereits an verschiedenen Stellen erläutert, können auch in Zusammenhang mit der Ausführungsvariante gemäss

Figur 12 wiederum reaktiv (insbesondere "live") auf die seitens des Messkopfes 8 und auch seitens des Messobjekts 1 gemessenen Beschleunigungen unter anderem etwa folgende Massnahmen sofort während des aktuell laufenden Messvorgangs getroffen werden:
● Anpassung der Reihenfolge der nacheinander zu projizierenden, unterschiedlichen Mustern der Muster-Sequenz (etwa derart, dass bei verhältnismässig hohem aktuellem Dynamikgrad jene Muster der Muster-Sequenz mit verhältnismässig geringem Feinheitsgrad und bei verhältnismässig geringem aktuellem Dynamikgrad jene Muster der Muster-Sequenz mit verhältnismässig hohem Feinheitsgrad projiziert werden), und/oder
● Anpassung der Projektionsdauer der einzelnen zu projizierenden Muster, und/oder
● Anpassung (Wahl) der Projektionszeitpunkte der einzelnen zu projizierenden Muster, und/oder
● Anpassung der Helligkeit und/oder des Feinheits- und/oder des Strukturierungsgrads der einzelnen zu projizierenden Muster, und/oder
● Anpassung eines einzelnen Musters der Muster-Sequenz derart während der Projektion desselben, dass die dadurch auf der Messobjekt-Oberfläche erzeugte Beleuchtungsstruktur - zumindest während der Belichtungszeit des zur Erfassung der mit diesem Muster beleuchteten Messobjekt-Oberfläche vorgesehenen Bildes der Bild-Sequenz - lagestabil auf der Messobjekt-Oberfläche gehalten wird, und/oder
● Anpassung einer Flächenabdeckung und/oder Grösse auf der Messobjekt-Oberfläche der einzelnen zu projizierenden Muster, und/oder
● Anpassung einer Wellenlänge der zum Beleuchten verwendeten optischen Strahlung für die einzelnen zu projizierenden Muster.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Optisches Messverfahren zum Bestimmen von 3D-Koordinaten von einer Vielzahl von Messpunkten einer Messobjekt-Oberfläche (1s),
mit den Schritten
● Beleuchten der Messobjekt-Oberfläche (1s) mit einer Muster-Sequenz aus unterschiedlichen Mustern (2a,2b) durch einen Projektor (3),
● Aufnehmen einer Bild-Sequenz von der mit der Muster-Sequenz beleuchteten Messobjekt-Oberfläche (1s) mit einem Kamerasystem (4), und
● Bestimmen der 3D-Koordinaten der Messpunkte durch Auswerten der Bild-Sequenz, insbesondere wobei eine Folge von Helligkeitswerten für identische Messpunkte der Messobjekt-Oberfläche (1s) in jeweiligen Bildern der aufgenommenen Bild-Sequenz ermittelt wird, **dadurch gekennzeichnet, dass**
translatorische und/oder rotatorische Beschleunigungen
● des Projektors (3),
● des Kamerasystems (4) und/oder
● des Messobjekts (1)
gemessen werden und in Abhängigkeit von den gemessenen Beschleunigungen das Beleuchten der Messobjekt-Oberfläche (1s) und/oder das Aufnehmen der Bild-Sequenz, insbesondere zeitlich im Wesentlichen unmittelbar und live während des Messvorgangs, reaktiv angepasst werden.

2. Optisches Messverfahren nach Anspruch 1,
**dadurch gekennzeichnet, dass**
Beschleunigungen des Projektors (3), des Kamerasystems (4) bzw. des Messobjekts (1) in allen sechs Freiheitsgraden gemessen werden und das Messen der Beschleunigungen fortlaufend mit einer bestimmten Messrate, insbesondere zwischen etwa 1 und 2000 Hz, im Speziellen zwischen etwa 50 und 2000 Hz, zumindest während der Belichtungszeiten der einzelnen Bilder der Bild-Sequenz erfolgt, insbesondere während des gesamten Vorgangs des Beleuchtens der Messobjekt-Oberfläche (1s) und des Aufnehmens der Bild-Sequenz oder mehrerer Bild-Sequenzen.

3. Optisches Messverfahren nach Anspruch 1 oder 2,
**dadurch gekennzeichnet, dass**
abhängig von einem während des Beleuchtens anhand der gemessenen Beschleunigungen abgeleiteten aktuellen Dynamikgrad des Projektors (3), des Kamerasystems (4) bzw. des Messobjekts (1) - zeitlich im Wesentlichen unmittelbar reaktiv auf das Ableiten des jeweils aktuellen Dynamikgrads - die Muster-Sequenz angepasst wird, im Speziellen wobei
● eine Reihenfolge der nacheinander zu projizierenden, unterschiedlichen Mustern der Muster-Sequenz angepasst wird, im Speziellen derart, dass bei verhältnismässig hohem aktuellem Dynamikgrad jene Muster der Muster-Sequenz mit verhältnismässig geringem Feinheitsgrad und bei verhältnismässig geringem aktuellem Dynamikgrad jene Muster der Muster-Sequenz mit verhältnismässig hohem Feinheitsgrad projiziert werden, und/oder
● eine Helligkeit der einzelnen zu projizierenden Muster angepasst wird, und/oder
● eine Projektionsdauer der einzelnen zu projizierenden Muster angepasst wird, und/oder
● Projektionszeitpunkte der einzelnen zu projizierenden Muster angepasst werden, und/oder
● ein Feinheits- und/oder Strukturierungsgrad der einzelnen zu projizierenden Muster angepasst werden, und/oder
● ein einzelnes Muster der Muster-Sequenz derart während der Projektion desselben angepasst wird, dass die dadurch auf der Messobjekt-Oberfläche (1s) erzeugte Beleuchtungsstruktur - zumindest während der Belichtungszeit des zur Erfassung der mit diesem Muster beleuchteten Messobjekt-Oberfläche (1s) vorgesehenen Bildes der Bild-Sequenz - lagestabil auf der Messobjekt-Oberfläche (1s) gehalten wird, und/oder
● eine Flächenabdeckung und/oder Grösse auf der Messobjekt-Oberfläche (1s) der einzelnen zu projizierenden Muster angepasst werden, und/oder
● eine Wellenlänge der zum Beleuchten verwendeten optischen Strahlung für die einzelnen zu projizierenden Muster angepasst wird.

4. Optisches Messverfahren nach einem der Ansprüche 1 bis 3,
**dadurch gekennzeichnet, dass**
abhängig von einem während des Beleuchtens anhand der gemessenen Beschleunigungen abgeleiteten aktuellen Dynamikgrad des Projektors (3), des Kamerasystems (4) bzw. des Messobjekts (1) - zeitlich im Wesentlichen unmittelbar reaktiv auf das Ableiten des jeweils aktuellen Dynamikgrads - die Bild-Sequenz angepasst wird, im Speziellen wobei
● ein jeweiliger Körnungsgrad für die einzelnen aufzunehmenden Bilder angepasst wird, und/oder
● eine jeweilige Belichtungsdauer für die einzelnen aufzunehmenden Bilder angepasst wird, und/oder
● Aufnahmezeitpunkte der einzelnen aufzunehmenden Bilder angepasst werden, und/oder
● ein jeweiliger Erfassungsbereich für die einzelnen aufzunehmenden Bilder angepasst wird, und/oder
● eine jeweilige Blendenöffnungsweite für die einzelnen aufzunehmenden Bilder angepasst wird.

5. Optisches Messverfahren nach einem der Ansprüche 1 bis 4,
**dadurch gekennzeichnet, dass**
● der Projektor (3) ein Gehäuse aufweist, insbesondere ein den Projektor (3) und das Kamerasystem (4) gemeinsam integrierendes Messkopfgehäuse,
● die rotatorischen und translatorischen Beschleunigungen des Gehäuses gemessen werden und
● abhängig von den gemessenen Beschleunigungen des Gehäuses im Wesentlichen in Echtzeit eine Projektionsrichtung und/oder eine Projektionsquellenposition des Projektors (3) relativ zum Gehäuse derart angepasst werden, dass - im Speziellen durch vibrationsbedingtes oder handtremorbedingtes Unruhighalten verursachte - Bewegungen des Gehäuses kompensiert werden und somit die Projektionsrichtung bzw. die Projektionsquellenposition des Projektors (3) zumindest während des Aufnehmens von jeweils einzelnen Bildern der Bild-Sequenz im Wesentlichen konstant gehalten wird.

6. Optisches Messverfahren nach einem der Ansprüche 1 bis 5,
**dadurch gekennzeichnet, dass**
● das Kamerasystem (4) mit mindestens einer Kamera (4a,4b,4c) ein Gehäuse aufweist, insbesondere ein den Projektor (3) und das Kamerasystem (4) gemeinsam integrierendes Messkopfgehäuse,
● die rotatorischen und translatorischen Beschleunigungen des Gehäuses gemessen werden und
● abhängig von den gemessenen Beschleunigungen des Gehäuses im Wesentlichen in Echtzeit eine Erfassungsrichtung und/oder eine Aufnahmeposition der mindestens einen Kamera (4a,4b,4c) des Kamerasystems (4) relativ zum Gehäuse derart angepasst werden, dass - im Speziellen durch vibrationsbedingtes oder handtremorbedingtes Unruhighalten verursachte - Bewegungen des Gehäuses kompensiert werden und somit die Erfassungsrichtung bzw. die Aufnahmeposition der mindestens einen Kamera (4a,4b,4c) des Kamerasystems (4) zumindest während des Aufnehmens von jeweils einzelnen Bildern der Bild-Sequenz im Wesentlichen konstant gehalten wird.

7. Optisches Messverfahren nach einem der Ansprüche 1 bis 6,
**dadurch gekennzeichnet, dass**
● abhängig von den gemessenen Beschleunigungen, im Speziellen abhängig von davon abgeleiteten aktuellen Lagen und Orientierungen des Projektors, des Kamerasystems bzw. des Messobjekts,
● sowie insbesondere zusätzlich abhängig von zumindest grob bekannten oder zuvor zumindest grob bestimmten 3D-Koordinaten der Messobjekt-Oberfläche (1s), aktuelle Messfortschritts- und/oder Messvorgangsadaptionsparameter (9) abgeleitet werden und diese zur Benutzerführung und Optimierung des Messvorgangs auf die Messobjekt-Oberfläche (1s) projiziert werden,
insbesondere wobei Informationen bezüglich
● einer Messrichtung, in die der Projektor (3) und/oder das Kamerasystem (4) im Rahmen des weiteren Messvorgangs auszurichten sind, und/oder
● einer Messposition, die durch den Projektor (3) und/oder das Kamerasystem (4) im Rahmen des weiteren Messvorgangs einzunehmen sind, und/oder
● Haltedauern, während welchen der Projektor (3) und/oder das Kamerasystem (4) möglichst ruhig in einer gleich bleibenden Messrichtung und -position zu halten sind, und/oder
● eines anhand der gemessenen Beschleunigungen abgeleiteten aktuellen Dynamikgrads des Projektors (3), des Kamerasystems (4) bzw. des Messobjekts (1), im Speziellen wobei angegeben wird ob eine vordefinierte Dynamikgradobergrenze aktuell eingehalten wird oder nicht,
als die Messfortschritts- bzw. Messvorgangsadaptionsparameter (9) projiziert werden.

8. Optisches Messverfahren nach einem der Ansprüche 1 bis 7,
**dadurch gekennzeichnet, dass**
● das Bestimmen der 3D-Koordinaten der Messpunkte photogrammetrisch nach dem Triangulationsprinzip aus der aufgenommenen Bild-Sequenz und unter Kenntnis des in den jeweiligen Bildern der Bild-Sequenz erfassten Musters der Muster-Sequenz erfolgt, insbesondere vermittels Vorwärtsschnitt,
und/oder
● das Beleuchten und das Aufnehmen von relativ zueinander bekannten Positionen aus und mit relativ zueinander bekannten Ausrichtungen erfolgt, insbesondere wobei das Aufnehmen mit mehreren Kameras (4a,4b,4c) als Teile des Kamerasystems (4) von unterschiedlichen Positionen aus erfolgt.

9. Optisches Messverfahren nach einem der Ansprüche 1 bis 8,
**dadurch gekennzeichnet, dass**
die Messobjekt-Oberfläche (1s) nacheinander mit
● Streifenmustern unterschiedlichen Feinheitsgrads, ● Pseudocodes und/oder
● Random Patterns
als die unterschiedlichen Muster der Muster-Sequenz beleuchtet wird, insbesondere wobei das Beleuchten mit den einzelnen Mustern (2a,2b) nacheinander mit einer Projektionsdauer von etwa zwischen 10 und 300 ms und das Aufnehmen der Bild-Sequenz mit einer Belichtungsdauer pro Bild von jeweils etwa zwischen 10 und 300 ms erfolgt.

10. Optisches Messsystem (7) zur Bestimmung von 3D-Koordinaten einer Vielzahl von Messpunkten einer Messobjekt-Oberfläche (1s),
mit
● einem Projektor (3) zur Beleuchtung der Messobjekt-Oberfläche (1s) mit einer Muster-Sequenz aus unterschiedlichen optischen Mustern (2a,2b),
● einem Kamerasystem (4) zur Aufnahme einer Bild-Sequenz von der mit der Muster-Sequenz beleuchteten Messobjekt-Oberfläche (1s), und
● einer Auswerteeinheit zur Bestimmung der 3D-Koordinaten der Messpunkte aus der Bild-Sequenz, insbesondere unter Ermittlung einer Folge von Helligkeitswerten für identische Messpunkte der Messobjekt-Oberfläche (1s) in jeweiligen Bildern der aufgenommenen Bild-Sequenz,
**dadurch gekennzeichnet, dass**
● am Projektor (3),
● am Kamerasystem (4) und/oder
● am Messobjekt (1)
Inertialsensoren (5a,5b) angeordnet sind zur Messung von translatorischen und/oder rotatorischen Beschleunigungen des Projektors (3), des Kamerasystems (4) und/oder des Messobjekts (1),
und dass die Auswerteeinheit (6) ausgebildet ist zur Bewirkung einer in Abhängigkeit von den gemessenen Beschleunigungen, insbesondere zeitlich im Wesentlichen unmittelbar und live während des Messvorgangs, reaktiv erfolgenden Anpassung der durch den Projektor (3) erzeugten Beleuchtung der Messobjekt-Oberfläche (1s) und/oder der durch das Kamerasystem (4) erfolgenden Aufnahme der Bild-Sequenz.

11. Optisches Messsystem (7) nach Anspruch 10,
**dadurch gekennzeichnet, dass**
● die Auswerteeinheit (6) derart zur Steuerung des Projektors (3) und/oder des Kamerasystems (4) ausgebildet ist, dass abhängig von einem während des Messvorgangs anhand der gemessenen Beschleunigungen abgeleiteten aktuellen Dynamikgrad des Projektors (3) bzw. des Kamerasystems (4) live eine Anpassung der durch den Projektor (3) erzeugten Beleuchtung der Messobjekt-Oberfläche (1s) bzw. der durch das Kamerasystem (4) erfolgenden Aufnahme der Bild-Sequenz erfolgt,
und/oder
● die Inertialsensoren (5a,5b) in einer - insbesondere auf MEMS-basierten Komponenten beruhenden - inertialen Messeinheit derart kombiniert und integriert sind, dass die inertiale Messeinheit zur Messung der Beschleunigungen in allen sechs Freiheitsgraden ausgebildet ist, insbesondere mit einer Messrate zwischen etwa 1 und 2000 Hz, im Speziellen zwischen etwa 50 und 2000 Hz.

12. Optisches Messsystem (7) nach Anspruch 10 oder 11, **dadurch gekennzeichnet, dass**
● der Projektor (3) ein Gehäuse aufweist, insbesondere wobei der Projektor (3) und das Kamerasystem (4) mit fixer und bekannter Positionierung und Orientierung relativ zueinander körperlich in einem gemeinsamen Messkopf (8) untergebracht sind und der Messkopf (8) ein den Projektor (3) und das Kamerasystem (4) gemeinsam integrierendes Messkopfgehäuse (8) aufweist,
● die Inertialsensoren (5a,5b) am Gehäuse angeordnet sind und somit zur Messung der rotatorischen und translatorischen Beschleunigungen des Gehäuses ausgebildet sind, und
● ein Projektor-Stellmechanismus, insbesondere aus MEMS-basierten Stellkomponenten oder Piezostellelementen, zur Änderung einer Projektionsrichtung und/oder einer Projektionsquellenposition des Projektors (3) relativ zum Gehäuse vorhanden ist, der von der Auswerteeinheit ansteuerbar ist, sodass abhängig von den gemessenen Beschleunigungen des Gehäuses im Wesentlichen in Echtzeit die Projektionsrichtung und/oder die Projektionsquellenposition des Projektors (3) derart relativ zum Gehäuse angepasst werden, dass - im Speziellen durch vibrationsbedingtes oder handtremorbedingtes Unruhighalten verursachte - Bewegungen des Gehäuses kompensiert werden und somit die Projektionsrichtung bzw. die Projektionsquellenposition des Projektors (3) zumindest während des Aufnehmens von jeweils einzelnen Bildern der Bild-Sequenz im Wesentlichen konstant gehalten wird.

13. Optisches Messsystem (7) nach einem der Ansprüche 10 bis 12,
**dadurch gekennzeichnet, dass**
● der Kamerasystem (4) mit mindestens einer Kamera (4a,4b,4c) ein Gehäuse aufweist, insbesondere wobei der Projektor (3) und das Kamerasystem (4) mit fixer und bekannter Positionierung und Orientierung relativ zueinander körperlich in einem gemeinsamen Messkopf (8) untergebracht sind und der Messkopf (8) ein den Projektor (3) und das Kamerasystem (4) gemeinsam integrierendes Messkopfgehäuse (8) aufweist,
● die Inertialsensoren (5a,5b) am Gehäuse angeordnet sind und somit zur Messung der rotatorischen und translatorischen Beschleunigungen des Gehäuses ausgebildet sind, und
● ein Kamera-Stellmechanismus, insbesondere aus MEMS-basierten Stellkomponenten oder Piezostellelementen, zur Änderung einer Erfassungsrichtung und/oder einer Aufnahmeposition der mindestens einen Kamera (4a,4b,4c) des Kamerasystems (4) relativ zum Gehäuse vorhanden ist, der von der Auswerteeinheit ansteuerbar ist, sodass abhängig von den gemessenen Beschleunigungen des Gehäuses im Wesentlichen in Echtzeit die Erfassungsrichtung und/oder die Aufnahmeposition der mindestens einen Kamera (4a,4b,4c) des Kamerasystems (4) derart relativ zum Gehäuse angepasst werden, dass - im Speziellen durch vibrationsbedingtes oder handtremorbedingtes Unruhighalten verursachte - Bewegungen des Gehäuses kompensiert werden und somit die Erfassungsrichtung bzw. die Aufnahmeposition der mindestens einen Kamera (4a,4b,4c) zumindest während des Aufnehmens von jeweils einzelnen Bildern der Bild-Sequenz im Wesentlichen konstant gehalten wird.

14. Optisches Messsystem (7) nach einem der Ansprüche 10 bis 13,
**dadurch gekennzeichnet, dass**
● die Auswerteeinheit ausgebildet ist zur Ableitung von aktuellen Messfortschritts- und/oder Messvorgangsadaptionsparameter abhängig von den gemessenen Beschleunigungen, im Speziellen abhängig von davon abgeleiteten aktuellen Lagen und Orientierungen des Projektors, des Kamerasystems bzw. des Messobjekts, sowie insbesondere zusätzlich abhängig von zumindest grob bekannten oder zuvor zumindest grob bestimmten 3D-Koordinaten der Messobjekt-Oberfläche (1s),
und dass
● der Projektor (3) derart ausgebildet und ausgelegt sowie derart von der Auswerteeinheit ansteuerbar ist, dass Informationen bezüglich der abgeleiteten aktuellen Messfortschritts- und/oder Messvorgangsadaptionsparameter (9) zur Benutzerführung und Optimierung des Messvorgangs auf die Messobjekt-Oberfläche (1s) projiziert werden, insbesondere wobei Informationen bezüglich
□ einer Messrichtung, in die der Projektor (3) und/oder das Kamerasystem (4) im Rahmen des weiteren Messvorgangs auszurichten sind, und/oder
□ einer Messposition, die durch den Projektor (3) und/oder das Kamerasystem (4) im Rahmen des weiteren Messvorgangs einzunehmen sind, und/oder
□ Haltedauern, während welchen der Projektor (3) und/oder das Kamerasystem (4) möglichst ruhig in einer gleich bleibenden Messrichtung und -position zu halten sind, und/oder
□ eines anhand der gemessenen Beschleunigungen abgeleiteten aktuellen Dynamikgrads des Projektors (3), des Kamerasystems (4) bzw. des Messobjekts (1), im Speziellen wobei angegeben wird ob eine vordefinierte Dynamikgradobergrenze aktuell eingehalten wird oder nicht,
als die Messfortschritts- bzw. Messvorgangsadaptionsparameter (9) projiziert werden.

15. Optisches Messsystem (7) nach einem der Ansprüche 10 bis 14,
**dadurch gekennzeichnet, dass**
dieses - insbesondere automatisch gesteuert durch die Auswerteeinheit - zur Durchführung des optischen Messverfahrens nach einem der Ansprüche 1 bis 9 ausgebildet und ausgelegt ist.
